# EUROPÄISCHE PATENTSCHRIFT

(11) **EP 0 473 832 B1**
(45) Veröffentlichungstag und Bekanntmachung des Hinweises auf die Patenterteilung: **15.03.1995**
(21) Anmeldenummer: 90117257.7
(22) Anmeldetag: 07.09.1990
(51) Int. Cl.: B60R 22/36

(54) **Gurtaufroller mit einer fahrzeugsensitiven und gurtbandsensitiven Sperreinrichtung**
Belt retractor with a vehicle and belt responsive locking device
Rétracteur de sangle comportant un dispositif de blocage sensible au véhicule à la sangle

(43) Veröffentlichungstag der Anmeldung: 11.03.1992
(73) Patentinhaber: TRW Occupant Restraint Systems GmbH, 73553 Alfdorf (DE)
(72) Erfinder: Kalbantner, Günter, D-7070 Schwäbisch Gmünd-Lindach (DE); Ebner, Ralf, D-7162 Gschwend (DE); Kopetzky, Robert, D-7070 Schwäbisch Gmünd (DE)
(74) Vertreter: Leiser, Gottfried, Dipl.-Ing.

(56) Entgegenhaltungen:
- FR-A- 2 536 661
- US-A- 3 510 085
- US-A- 3 711 037
- US-A- 4 244 600

## Beschreibung

Die Erfindung betrifft einen Gurtaufroller mit einer fahrzeugsensitiven und gurtbandsensitiven Sperreinrichtung, die eine relativ zur Gurtspule begrenzt verdrehbare, mit einer Außenverzahnung versehene Steuerscheibe aufweist, deren Relativdrehung zur Gurtspule in eine Einsteuerbewegung für ein Sperrelement der Sperreinrichtung umgesetzt wird, wobei ein Tastelement vorgesehen ist, das den Außendurchmesser des Gurtwickels auf der Gurtspule abfühlt und wobei der durch den veränderlichen Außendurchmesser des Gurtbandwickels verursachte Bewegungshub des Tastelements durch einen Umsetzmechanismus in eine Steuerbewegung umgesetzt wird, die eine Sperrung bei großem Außendurchmesser des Gurtbandwickels verhindert.

Ein derartiger Gurtaufroller ist aus der FR-A-25 36 661 bekannt. Dieser weist zwei gegeneinander in entgegengesetzte Richtungen verschiebbare Sperrelemente auf. Bei einer Relativbewegung der Sperrelemente in bezug auf die Gurtspule wird diese blockiert, indem die Sperrelemente gegeneinander verschoben werden, bis sie in eine Sperrverzahnung eingreifen. Das Tastelement ist dabei als Hebel ausgebildet, an dem weitere Teile angeformt sind, die den Umsetzmechanismus bilden.

In seltenen Fällen kommt es bei herkömmlichen Sicherheitsgurtaufrollern mit gurtbandsensitiver Sperreinrichtung zu einer unerwünschten Blockierung der Gurtspule. Dieser Effekt kann eintreten, wenn ein relativ langer, von der Gurtspule abgezogener Gurtbandabschnitt plötzlich freigegeben und unbehindert durch die im normalen Gebrauch auftretenden Reibungsverluste auf der Gurtspule wiederaufgewickelt wird. Am Ende des Aufwickelvorganges ist das Gurtband durch die Massenträgheit der Gurtspule unter eine relativ hohe Zugspannung gesetzt, die eine Rückdrehung der Gurtspule in Abzugsrichtung und mit einer so hohen Beschleunigung bewirkt, daß der gurtbandsensitive Sperrmechanismus aktiviert werden kann.

Der Erfindung liegt die Aufgabe zugrunde, eine solche unerwünschte Sperrung der Gurtspule mit einfachen Mitteln zu verhindern.

Diese Aufgabe wird bei einem Gurtaufroller der eingangs angegebenen Art erfindungsgemäß dadurch gelöst, daß neben der Steuerscheibe ein drehfest an die Gurtspule angeschlossenes Synchronisationszahnrad angeordnet ist, ein Kuppelzahnrad mit einer zu den Verzahnungen der Steuerscheibe und des Synchronisationszahnrades passenden Außenverzahnung vorgesehen ist und durch die Steuerbewegung das Kuppelzahnrad ab einem bestimmten Wert des Außendurchmessers des Gurtbandwickels sowohl mit der Verzahnung der Steuerscheibe als auch mit der Verzahnung des Synchronisationszahnrades in Eingriff gebracht wird. Sobald das Kuppelzahnrad mit den Verzahnungen der Steuerscheibe und des Synchronisationszahnrades in Eingriff gebracht ist, sind die Steuerscheibe und die Gurtspule drehfest miteinander gekoppelt, so daß keine Relativdrehung der Steuerscheibe zur Gurtspule auftreten kann. Da aber durch eine Relativdrehung zwischen Gurtspule und Steuerscheibe die Sperreinrichtung des Gurtaufrollers aktiviert wird, kann bei drehfester Kopplung von Steuerscheibe und Gurtspule keine Aktivierung der Sperreinrichtung erfolgen.

Da bei dem erfindungsgemäßen Gurtaufroller die ungewollte Aktivierung der Sperreinrichtung durch Einwirken auf die Steuerscheibe verhindert wird und die Steuerscheibe für geringe Steuerkräfte ausgelegt ist, können die zur Inaktivierung der Sperreinrichtung auf sie auszuübenden Kräfte sehr klein sein. Da ferner die Steuerscheibe zur Aktivierung der Sperreinrichtung eine Relativdrehung zur Gurtspule um einige Winkelgrade ausführen muß, ist auch die Drehstellung, in welcher sie relativ zur Gurtspule blockiert wird, unkritisch. An den Umsetzmechanismus, welcher die Hubbewegung des den Gurtbandwickel abtastenden Tastelementes in eine Eingriffsbewegung des Kuppelzahnrades umsetzt, werden daher hinsichtlich der mechanischen Belastbarkeit und der Herstellungs- sowie Montagegenauigkeit keine großen Ansprüche gestellt.

Nach einer besonders zweckmäßigen Ausführungsform ist das Tastelement als am Gehäuse des Gurtaufrollers schwenkbar gelagerter Tasthebel ausgebildet; das Kuppelzahnrad ist an einem am Gehäuse des Gurtaufrollers schwenkbar gelagerten Schwenkhebel drehbar gelagert. Ferner sind der Tasthebel und der Schwenknebel um dieselbe Achse schwenkbar gelagert. Der Tasthebel und der Schwenkhebel bilden die beiden Arme eines zweiarmigen Hebels, die aber erst ab dem bestimmten Außendurchmesser des Gurtbandwickels funktionell und elastisch miteinander gekoppelt sind. Die Richtung des Bewegungshubes des Tasthebels bei zunehmendem Durchmesser des Gurtbandwickels, also radial von innen nach außen, wird durch den zweiarmigen Hebel in eine gegenläufige, radial einwärts gerichtete Bewegung des Kuppelzahnrades umgesetzt. Der Umsetzmechanismus ist somit auf lediglich zwei elastisch miteinander gekoppelte Hebelarme reduziert.

Weitere zweckmäßige Ausführungsformen der Erfindung ergeben sich aus den Unteransprüchen.

Weitere Vorteile und Merkmale der Erfindung ergeben sich aus der folgenden Beschreibung einer Ausführungsform und aus der Zeichnung, auf die Bezug genommen wird. In der Zeichnung zeigen:
- Fig. 1: einen axialen Teilschnitt der Ausführungsform des Gurtaufrollers; und
- Fig. 2: eine Seitenansicht des in Fig. 1 gezeigten Gurtaufrollers mit aufgebrochen dargestellter Steuerscheibe.

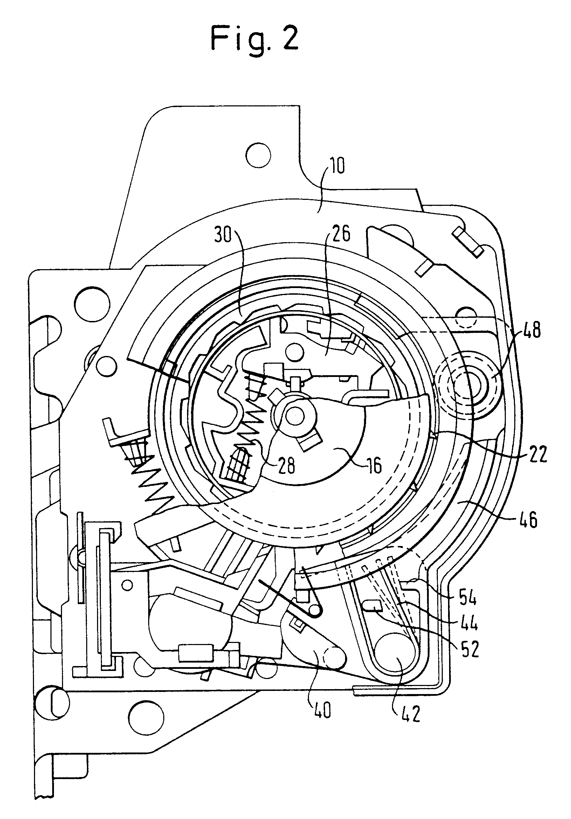

In einem lasttragenden Gehäuse 10 des Gurtaufrollers ist eine Gurtspule 12 zur Aufnahme des Gurtbandes drehbar gelagert. Der Gurtaufroller ist mit einer notfallsperrenden Sperreinrichtung ausgerüstet, die sowohl gurtbandsensitiv als auch fahrzeugsensitiv aktivierbar ist. Die Sperreinrichtung ist in herkömmlicher Weise ausgebildet und wird daher nicht näher beschrieben. Der Steuermechanismus zur gurtbandsensitiven und fahrzeugsensitiven Ansteuerung der Sperreinrichtung umfaßt eine Steuerscheibe 14, die drehbar auf einem Lagerteil 16 gelagert ist, das durch einen Stift 18 drehfest mit der Gurtspule 12 verbunden ist. Mit der Steuerscheibe 14 sind ein Steuerzahnrad 20, das mit einer Steuerverzahnung 22 versehen ist, und eine als träge Masse wirkende Metallscheibe 24 gekoppelt. Wie aus Fig. 2 ersichtlich ist, ist an dem Lagerteil 16 ferner eine Klinke 26 schwenkbar gelagert. Die Klinke 26, die durch eine Feder 28 in ihre Ruhestellung vorbelastet ist, wirkt mit einer Innenverzahnung eines Ansteuerringes 30 zusammen, durch dessen Drehbewegung die Sperreinrichtung aktivierbar ist.

Mit der Steuerverzahnung 22 des Steuerzahnrades 20 wirkt in herkömmlicher Weise eine Steuerklinke zusammen, die durch einen Trägheitssensor fahrzeugsensitiv in die Bewegungsbahn der Steuerzähne angehoben wird. Bei Gurtbandabzug tritt dann eine Relativdrehung zwischen Steuerscheibe 14 und Gurtspule auf. Diese Relativdrehung wird über einen Nocken auf die Klinke 26 übertragen, die dann in die Innenverzahnung des Ansteuerringes 30 eingreift und diesen drehfest mit der Gurtspule 12 koppelt. Weiterer Gurtbandabzug führt daher zur Drehung des Ansteuerringes 30 und folglich zur Aktivierung der Sperreinrichtung. Eine Relativdrehung der Steuerscheibe 14 zur Gurtspule 12 tritt aber auch gurtbandsensitiv bei plötzlichem Gurtbandabzug auf, da die Steuerscheibe 14 aufgrund der an sie angekoppelten Metallscheibe 24 und deren Massenträgheit gegenüber der Drehbewegung der Gurtspule zurückbleibt.

Die bisher beschriebene Ausgestaltung des Gurtaufrollers unterscheidet sich nicht von herkömmlichen Konstruktionen, wie sie beispielsweise in der DE-OS 28 26 286 beschrieben sind.

Um eine ungewollte Aktivierung der Sperreinrichtung bei plötzlichem Aufrollen des Gurtbandes zu verhindern, ist der Gurtaufroller mit einer Einrichtung versehen, die eine Aktivierung der Sperreinrichtung ab Erreichen eines vorbestimmten Wertes des Außendurchmessers des Gurtbandwickels auf der Gurtspule 12 verhindert. Zu dieser Einrichtung gehört ein Tasthebel 40, der auf einer Achse 42 schwenkbar gelagert ist und einen dem Außendurchmesser des Gurtbandwickels folgenden Schwenkhub um diese Achse 42 ausführt. Dieser Tasthebel 40 ist durch eine Blattfeder 44 elastisch mit einem bogenförmigen Schwenkhebel 46 gekoppelt. Am freien Ende dieses Schwenkhebels 46 ist ein Kupplungszahnrad 48, das aus zwei gleichen, im axialen Abstand voneinander angeordneten Zahnrädern besteht, frei drehbar gelagert. An das Lagerteil 16 angeschlossen ist ein Synchronisationszahnrad 50, dessen Außenverzahnung dem einen der beiden Zahnräder des Kupplungszahnrades 48 gegenüberliegt. Das andere Zahnrad des Kupplungszahnrades 48 liegt einer Außenverzahnung am Außenumfang der Steuerscheibe 14 gegenüber.

Der Tasthebel 40 bildet mit dem gleichfalls auf der Achse 42 gelagerten Schwenkhebel 46 einen zweiarmigen Hebel, dessen Arme durch die Blattfeder 44 elastisch miteinander gekoppelt sind. Der Schwenkhebel 46 ist im Bereich seiner Lagernabe mit zwei im Abstand voneinander angeordneten Anschlägen 52, 54 versehen, zwischen denen der freie Schenkel der Blattfeder 44 beweglich ist.

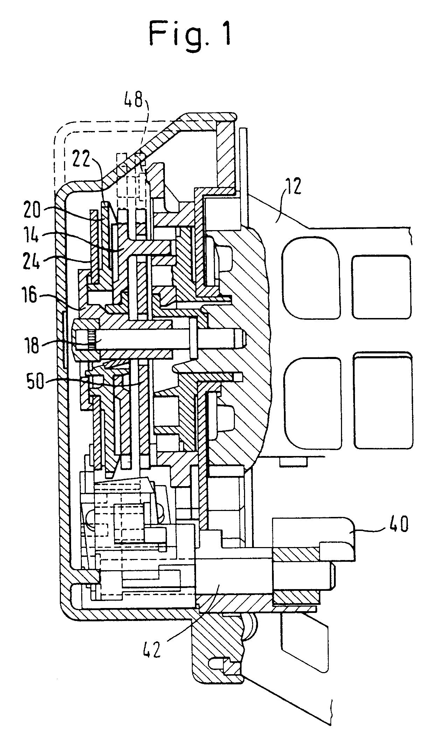

Durch eine ab einem bestimmten Wert des Außendurchmessers des Gurtbandwickels erfolgende, radial auswärts gerichtete Schwenkbewegung des Tasthebels 40 wird der Schwenkhebel 46 zu einer radial einwärts gerichteten Schwenkbewegung veranlaßt, durch welche das Kupplungszahnrad 48 sowohl mit der Verzahnung des Synchronisationszahnrades 50 als auch mit der Verzahnung der Steuerscheibe 14 in Eingriff gebracht wird. Dieser Zustand ist in Fig. 1 dargestellt. Durch das Kupplungszahnrad 48 werden das Synchronisationszahnrad 50 und die Steuerscheibe 14 drehfest miteinander und mit der Gurtspule 12 gekoppelt. Es ist also keine Relativdrehung zwischen Steuerscheibe 14 und Gurtspule möglich, so daß eine Aktivierung der Sperreinrichtung nicht erfolgen kann.

Bei abnehmendem Außendurchmesser des Gurtbandwickels wird der Tasthebel 40, der elastisch gegen den Gurtbandwickel vorgespannt ist, radial einwärts zurückgeschwenkt, wodurch der Schwenkhebel 46 radial auswärts verschwenkt wird, bis das Kupplungszahnrad 48 außer Eingriff mit dem Synchronisationszahnrad 50 und der Steuerscheibe 14 ist. In diesem Zustand ist die Sperreinrichtung wieder gurtbandsensitiv und fahrzeugsensitiv funktionsfähig.

## Patentansprüche

1. Gurtaufroller mit einer fahrzeugsensitiven und gurtbandsensitiven Sperreinrichtung, die eine relativ zur Gurtspule (12) begrenzt verdrehbare, mit einer Außenverzahnung versehene Steuerscheibe (14) aufweist, deren Relativdrehung zur Gurtspule (12) in eine Einsteuerbewegung für ein Sperrelement der Sperreinrichtung umgesetzt wird, wobei ein Tastelement (40) vorgesehen ist, das den Außendurchmesser des Gurtwickels auf der Gurtspule (12) abfühlt und wobei der durch den veränderlichen Außendurchmesser des Gurtbandwickels verursachte Bewegungshub des Tastelements (40) durch einen Umsetzmechanismus (44, 46, 52, 54) in eine Steuerbewegung umgesetzt wird, die eine Sperrung bei großem Außendurchmesser des Gurtbandwickels verhindert, dadurch gekennzeichnet, daß neben der Steuerscheibe (14) ein drehfest an die Gurtspule (12) angeschlossenes Synchronisationszahnrad (50) angeordnet ist, ein Kuppelzahnrad (48) mit einer zu den Verzahnungen der Steuerscheibe (14) und des Synchronisationszahnrades (50) passenden Außenverzahnung vorgesehen ist und durch die Steuerbewegung das Kuppelzahnrad (48) ab einem bestimmten Wert des Außendurchmessers des Gurtbandwickels sowohl mit der Verzahnung der Steuerscheibe (14) als auch mit der Verzahnung des Synchronisationszahnrades (50) in Eingriff gebracht wird.

2. Gurtaufroller nach Anspruch 1, dadurch gekennzeichnet, daß das Tastelement (40) als am Gehäuse (10) des Gurtaufrollers schwenkbar gelagerter Tasthebel ausgebildet ist, daß das Kuppelzahnrad (48) an einem am Gehäuse (10) des Gurtaufrollers schwenkbar gelagerten Schwenkhebel (46) drehbar gelagert ist, daß der Tasthebel (40) und der Schwenkhebel (46) um dieselbe Achse (42) schwenkbar sind und daß der Tasthebel (40) und der Schwenkhebel (46) funktionell die beiden Arme eines zweiarmigen Hebels bilden, dessen Arme ab dem bestimmten Außendurchmesser des Gurtbandwickels elastisch miteinander gekoppelt sind.

3. Gurtaufroller nach Anspruch 2, dadurch gekennzeichnet, daß die elastische Kopplung zwischen dem Tasthebel (40) und dem Schwenkhebel (46) durch eine Blattfeder (44) bewerkstelligt ist, die an ihrem einen Ende mit dem Tasthebel (40) fest verbunden ist und an ihrem anderen Ende zwischen zwei im Abstand voneinander gelegenen Anschlägen (52, 54) des Schwenkhebels (46) beweglich ist.

4. Gurtaufroller nach Anspruch 2 oder 3, dadurch gekennzeichnet, daß der Tasthebel (40) federelastisch gegen den Außenumfang des Gurtbandwickels belastet ist.

5. Gurtaufroller nach einem der vorstehenden Ansprüche, dadurch gekennzeichnet, daß das Kuppelzahnrad (48) als Doppelzahnrad mit zwei Zahnrädern gleichen Durchmessers ausgebildet ist.

## Claims

1. Belt retractor having a vehicle-sensitive and webbing-sensitive blocking means which comprises a control disc (14) which is limitedly rotatable relatively to the belt spool (12), is provided with an external toothing and the relative rotation of which with respect to the belt spool (12) is converted into an engagement movement for a blocking element of the blocking means, a sensing element (40) being provided which senses the external diameter of the belt coil on the belt spool (12) and the movement travel of the sensing element (40) caused by the variable external diameter of the webbing coil being converted by a conversion mechanism (44, 46, 52, 54) to a control movement which upon large external diameter of the webbing coil prevents a blocking, characterized in that adjacent the control disc (14) a synchronization gear (50) connected non-rotatably to the belt spool (12) is arranged, a coupling gear (48) is provided having an external toothing matching the toothings of the control disc (14) and the synchronization gear (50) and the movement travel of the coupling gear (48) from a predetermined value of the external diameter of the webbing coil onwards is brought into engagement both with the toothing of the control disc (14) and with the toothing of the synchronization gear (50).

2. Belt retractor according to claim 1, characterized in that the sensing element (40) is formed as sensing lever pivotally mounted on the housing (10) of the belt retractor, that the coupling gear (48) is rotatably mounted on a pivot lever (46) pivotally mounted on the housing (10) of the belt retractor, that the sensing lever (40) and the pivot lever (46) are pivotal about the same axis (42) and that the sensing lever (40) and the pivot lever (46) form functionally the two arms of a two-armed lever, the arms of which are resiliently coupled to each other from the predetermined external diameter of the webbing coil onwards.

3. Belt retractor according to claim 2, characterized in that the resilient coupling between the sensing lever (40) and the pivot lever (46) is effected by a leaf spring (44) which is fixedly connected at its one end to the sensing lever (40) and at its other end is movable between two spaced apart stops (52, 54) of the pivot lever (46).

4. Belt retractor according to claim 2 or 3, characterized in that the sensing lever (40) is loaded resiliently against the external diameter of the webbing coil.

5. Belt retractor according to any one of the preceding claims, characterized in that the coupling gear (48) is formed as double gear having two gears of the same diameter.

## Revendications

1. Rétracteur de ceinture avec un dispositif de blocage sensible au véhicule et sensible à la sangle, qui comporte un disque de commande (14) pouvant tourner de manière limitée par rapport à la bobine de sangle (12), pourvu d'une denture extérieure, et dont la rotation relative par rapport à la bobine de sangle (12) est convertie en un mouvement de commande d'un élément de blocage du dispositif de blocage, un élément de palpage (40) étant prévu qui palpe le diamètre extérieur du rouleau de sangle sur la bobine (12) et le déplacement de l'élément de palpage (40), causé par la variation du diamètre extérieur du rouleau de sangle, étant transformé par un mécanisme de conversion (44, 46, 52, 54) en un mouvement de commande, qui empêche un blocage lorsque le diamètre extérieur du rouleau de sangle est grand, caractérisé en ce qu'à côté du disque de commande (14) est placée une roue dentée de synchronisation (50) reliée fixe en rotation à la bobine de sangle (12), une roue dentée d'accouplement (48) étant prévue avec une denture extérieure adaptée aux dentures du disque de commande (14) et de la roue dentée de synchronisation (50) et le déplacement de commande provoquant l'engrènement de la roue dentée d'accouplement (48), à partir d'une valeur déterminée du diamètre extérieur du rouleau de sangle, avec la denture du disque de commande (14) ainsi qu'avec la denture de la roue dentée de synchronisation (50).

2. Rétracteur de ceinture selon la revendication 1, caractérisé en ce que l'élément de palpage (40) est réalisé sous la forme d'un levier de palpage, monté pivotant sur le boîtier (10) du rétracteur de ceinture, en ce que la roue dentée d'accouplement (48) est montée tournante sur un levier de pivotement (46), monté pivotant sur le boîtier (10) du rétracteur de ceinture, en ce que le levier de palpage (40) et le levier de pivotement (46) peuvent pivoter autour du même axe (42) et en ce que le levier de palpage (40) et le levier de pivotement (46) forment de manière fonctionnelle les deux bras d'un levier à deux bras qui sont accouplés élastiquement, à partir du diamètre extérieur déterminé du rouleau de sangle.

3. Rétracteur de ceinture selon la revendication 2, caractérisé en ce que l'accouplement élastique entre le levier de palpage (40) et le levier de pivotement (46) est réalisé par un ressort à lame (44) qui, à l'une de ses extrémités, est solidaire du levier de palpage (40) et, à son autre extrémité, est mobile entre deux butées (52, 54) du levier de pivotement (46), espacées l'une de l'autre.

4. Rétracteur de ceinture selon la revendication 2 ou 3, caractérisé en ce que le levier de palpage (40) est maintenu élastiquement, en formant ressort, contre le pourtour extérieur du rouleau de sangle.

5. Rétracteur de ceinture selon l'une des revendications précédentes, caractérisé en ce que la roue dentée d'accouplement (48) est une double roue dentée avec deux roues dentées de même diamètre.
